# EUROPEAN PATENT APPLICATION

(11) **EP 4 277 086 A1**
(43) Date of publication of application: **15.11.2023**
(21) Application number: 22275060.6
(22) Date of filing: 09.05.2022
(51) Int. Cl.: H02K 1/14, H02K 3/44, H02K 5/128, H02K 1/278

(54) **ELECTRICAL MACHINES**

(71) Applicant: Hamilton Sundstrand Corporation, Charlotte, NC 28217 (US)
(72) Inventor: SANGHA, Parminder, B93 8SY Dorridge (GB); SAWATA, Tadashi, CV3 5BN Coventry (GB)
(74) Representative: Dehns

(57) **Abstract**

An electrical machine is provided which comprises: a stator (4; 204; 304); a rotor (2; 202; 302); and at least one of a rotor sleeve (26; 226; 326) and a stator sleeve (20; 220; 320). The rotor sleeve and / or the stator sleeve extend between the stator and the rotor. At least one of the rotor sleeve and the stator sleeve is magnetically conductive. The magnetic permeability of the stator sleeve and / or the rotor sleeve is continuous along the circumference thereof.

## Description

### TECHNICAL FIELD

The present disclosure relates to electrical machines such as motors and generators and in particular to improving the performance of such machines.

### BACKGROUND

Electrical machines such as motors and generators are used in a number of applications including in motor vehicle and aircraft propulsion applications. In any application but particularly in the field of electric motors for aircraft propulsion, there is a need to improve the power density achieved by the motors. The power that can be achieved is influenced by a number of factors which include the maximum amount of heat which can be generated within the electrical machine and the strength of the magnetic field achieved between the stator and the rotor.

The present disclosure therefore seeks to provide an improved, more efficient electrical machine.

### SUMMARY

According to a first aspect of this disclosure, there is provided an electrical machine comprising:
a stator;
a rotor; and
at least one of a rotor sleeve and a stator sleeve extending between the stator and the rotor,
wherein at least one of the rotor sleeve and the stator sleeve is magnetically conductive, wherein the magnetic permeability of the stator sleeve and / or the rotor sleeve is continuous along the circumference thereof.

In any example of the disclosure, an electrical machine may comprise the stator sleeve, and be configured such that:
when the stator is positioned radially internally of the rotor, the stator sleeve extends around a radially outer surface of the stator; or
when the stator is positioned radially externally of the rotor, the stator sleeve extends around a radially inner surface of the stator.

In any example of the disclosure, an electrical machine may comprise the rotor sleeve, and be configured such that:
when the stator is positioned radially externally of the rotor, the rotor sleeve extends around a radially outer surface of the rotor; or
when the stator is positioned radially internally of the rotor, the rotor sleeve extends around a radially inner surface of the rotor.

In any example of the disclosure, the rotor may have an axis of rotation, wherein the stator may be positioned such that a central axis of the stator is coaxial with the axis of rotation.

In any example of the disclosure, the stator sleeve and /or the rotor sleeve may be made from stainless steel, wherein the stainless steel has induced magnetic properties from cold working.

In any example of the disclosure, the stator sleeve and /or the rotor sleeve may be made from a carbon composite or glass fibre composite including embedded magnetic material therein.

In any example of the disclosure, the stator sleeve and /or the rotor sleeve may be made from a resin or plastic including an embedded magnetic material therein.

In any example of the disclosure:
the stator sleeve may extend a full revolution around the radially inner surface or the radially outer surface of the stator; and/or
the rotor sleeve may extend a full revolution around the radially inner surface or the radially outer surface of the rotor.

In any example of the disclosure, the stator sleeve and /or the rotor sleeve may be annular.

In any example of the disclosure, the electrical machine may be configured such that:
the stator sleeve can be assembled onto and/or removed from the stator in a single piece, and /or
the rotor sleeve can be assembled onto and/or removed from the rotor in a single piece.

In any example of the disclosure, the rotor may comprise permanent magnets.

In any example of the disclosure, the stator sleeve and /or the rotor sleeve may have a relative permeability of between about 1.1 and 12.

In any example of the disclosure, the stator sleeve and /or the rotor sleeve may have a relative permeability of between about 1.2 and 10.

In any example of the disclosure, the stator sleeve and /or the rotor sleeve may have a relative permeability of between about 2 and 6.

From a further aspect of the disclosure, a method of assembling an electrical machine according to any example of the disclosure may be provided, the method comprising either:
inserting the stator into the stator sleeve and then inserting the stator and stator sleeve into the rotor; or
inserting the stator sleeve into the stator and then inserting the rotor into the stator and stator sleeve;
inserting the rotor sleeve into the rotor and then inserting the stator into the rotor and rotor sleeve; or
inserting the rotor into the rotor sleeve and then inserting the rotor and rotor sleeve into the stator.

### BRIEF DESCRIPTION OF DRAWINGS

Certain examples of the disclosure will now be described by way of example only and with reference to the accompanying drawings in which:
Figure 1 shows a schematic cross section view of a rotor and stator of an electrical machine according to an example of the disclosure;
Figure 2 shows a schematic cross section view of a rotor and stator of an electrical machine according to an alternative example of the disclosure;
Figure 3A shows a schematic cross section view of a rotor and stator of an electrical machine according to another alternative example of the disclosure;
Figure 3B shows an enlarged schematic cross section view of a part of the rotor and stator of an electrical machine of Figure 3A;
Figure 4A is a plot of the normalised torque and torque ripple achieved against the relative permeability of a stator sleeve in an electrical machine of the type shown in Figure 1;
Figure 4B is a plot of the normalised inductance achieved against the relative permeability of a stator sleeve in an electrical machine of the type shown in Figure 1;
Figure 5A is a plot of the normalised torque and torque ripple achieved against the relative permeability of a stator sleeve in an electrical machine of the type shown in Figure 3; and
Figure 5B is a plot of the normalised inductance achieved against the relative permeability of a stator sleeve in an electrical machine of the type shown in Figure 3.

### DETAILED DESCRIPTION

In any example, the disclosure may provide an electrical machine which has a stator and a rotor. The stator and the rotor may typically both be substantially annular components and the stator may be positioned either radially internally or radially externally of the rotor. An air gap may be formed between the rotor and the stator. Typically, the air gap may provide a mechanical clearance to allow the rotor to rotate freely relative to the stator.

The stator may take many different forms, and in some examples, may have radial slots in which windings may be formed. In such examples, a liquid coolant may be provided to cool the windings in the slots.

In alternative examples, the stator may not include slots and may, for example have a solid body. Such a stator may for example be air cooled.

In any example, depending on the application for which an electrical machine is to be used, other fluids such as hydraulic fluid may be passed through the air gap in the electrical machine.

In any example of the disclosure, a stator sleeve may be provided in the electrical machine. The stator sleeve may be annular and may extend around the stator and /or between the stator and the rotor. The stator sleeve may act to stop coolant fluid from leaking out of the stator into the air gap. The stator sleeve may also act to stop fluid in the air gap from leaking into the stator.

In any example of the disclosure, the stator sleeve may be magnetically conductive, and the magnetic permeability of the stator sleeve may be continuous around or along the circumference thereof. In the context described here and throughout this specification "magnetically conductive" is intended to include the sleeve being slightly magnetically conductive, i.e. having a magnetic permeability greater than 1 as will be discussed in further detail below. The magnetic conductivity of the stator sleeve may help to reduce the length of the magnetic air gap between the stator and the rotor. Further, at least in examples where open slots are included in the stator, the magnetically conductive stator sleeve may increase the slot leakage so increasing the phase inductance, reducing cogging torque and reducing magnet loss. By providing a magnetically conductive stator sleeve therefore, at least in some examples the efficiency of the electrical machine may be increased.

In various examples of the disclosure, the stator sleeve may be formed as a single component and may be configured such that it can be assembled onto and /or removed from the stator in a single piece. It will be understood that such a stator sleeve may be relatively simple and cost effective to manufacture and install.

In any example of the disclosure, in addition to or instead of the stator sleeve, the rotor may include a rotor sleeve which may extend around a radially outer or radially inner surface of the rotor. The rotor sleeve may extend between the rotor and the stator. In such examples, the rotor sleeve can be magnetically conductive. As for the stator sleeve, the magnetic permeability of the rotor sleeve may be continuous around or along the circumference thereof. In the context described here "magnetically conductive" is again intended to include the sleeve being slightly magnetically conductive, i.e. having a magnetic permeability greater than 1 as will be discussed in further detail below. The magnetic conductivity of the rotor sleeve may help to reduce the length of the magnetic air gap between the stator and the rotor. By providing a magnetically conductive rotor sleeve therefore, at least in some examples the efficiency of the electrical machine may be increased.

In various examples of the disclosure, by providing at least one or both of a stator sleeve and a rotor sleeve which are magnetically conductive, the length of the magnetic air gap between the stator and the rotor may be further reduced.

In any example, the rotor sleeve may be formed of any suitable material, such as for example any of the materials described above for the stator sleeve. In various examples of the disclosure, the rotor sleeve may be formed as a single component and may be configured such that it can be assembled onto and /or removed from the rotor in a single piece.

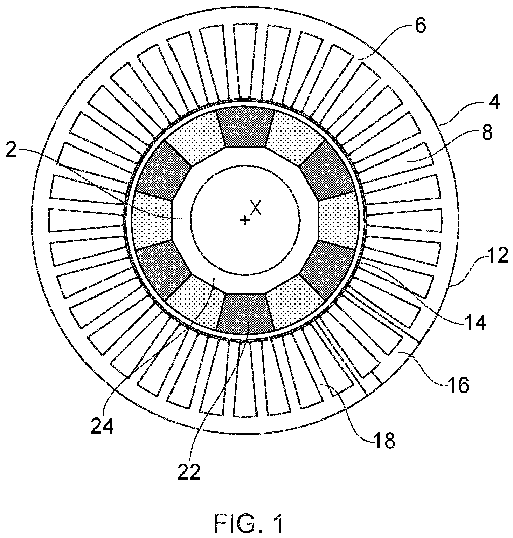

Figure 1 shows a rotor 2 and a stator 4 of a first example electrical machine (not shown). In this and the later examples, the machine is an electric motor. However, the principles of the disclosure as described in any examples herein may be applied to other electrical machines, for example generators.

In the example shown, the stator 4 comprises an annular core 6 which extends around a stator axis X. The annular core 6 may also extend parallel to the stator axis X to form a cylindrical body. In the example of Figure 1, the stator 4 is a radially outer stator, which extends around the outer circumference of the rotor 2. The core 6 comprises a plurality of slots 8 which receive windings (not shown). The slots 8 extend through the annular core 6 from a first axial end (not shown) to a second axial end (not shown) thereof. In the example shown, the slots 8 extend radially inwardly from the outer circumference 12 of the annular core 6. The slots 8 in the example shown are open at their radially inner ends 14 but are closed at their radially outer ends 16.

The core 6 further comprises a plurality of teeth 18 formed between the slots 8 and which may extend from the first axial end (not shown) to the second axial end (not shown) of the core 6.

Stator windings (not shown) can be formed around the teeth 18. To provide cooling to the electrical machine, the slots 8 in the stator 4 can be supplied with a coolant fluid (typically a liquid such as oil in this example). To stop the coolant fluid from leaking out of the stator a stator sleeve 20 may be provided. The stator sleeve 20 of the example shown is substantially cylindrical, having an annular cross section and is sized to fit inside the stator 4 so as to be able to hold coolant fluid within the stator 4.

In the example of Figure 1, the rotor 2 is located radially internally of the stator 4 and comprises permanent magnets 22 mounted circumferentially around an inner ring 24. A rotor sleeve 26 is provided at a radially outer perimeter of the rotor 2 and acts to hold the permanent magnets 22 in place on the inner ring 24.

The stator sleeve of this or any other examples is magnetically conductive and may, for example be made of stainless steel with induced magnetic properties from cold working, from a carbon composite or a glass fibre composite, for example glass fibre plastic, including embedded magnetic material therein, or from a resin or plastic including an embedded magnetic material therein. One such example would be of a resin with iron embedded in it. In the example shown, the rotor sleeve 26 is also magnetically conductive and may, for example be made of any of the materials described above in relation to the stator sleeve.

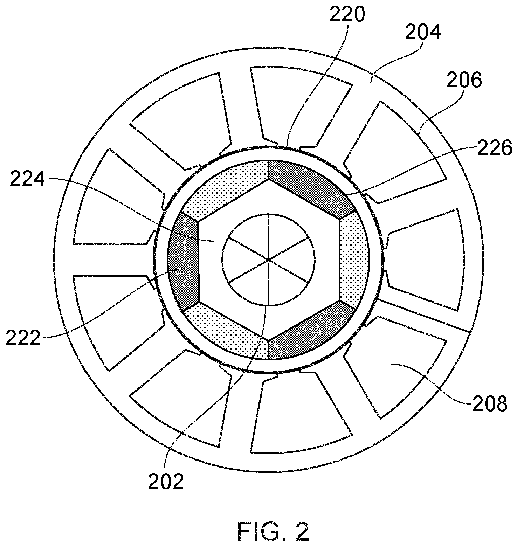

Figure 2 shows a rotor 202 and a stator 204 of a second example electrical machine (not shown).

In the example shown, the stator 204 again comprises an annular core 206 which extends around a stator axis (not shown). In the example of Figure 2, the stator 204 is again a radially outer stator, which extends around the outer circumference of the rotor 202. The core 206 comprises a plurality of slots 208 which receive windings (not shown). In contrast to the example of Figure 1, the stator 204 of the Figure 2 example is not designed to be flooded with a coolant fluid. A stator sleeve 220 is however provided. The stator sleeve 220 of the example shown is substantially cylindrical, having an annular cross section and is sized to fit inside the stator 204.

In the example of Figure 2, the rotor 202 is again located radially internally of the stator 204 and comprises permanent magnets 222 mounted circumferentially around an inner ring 224. A rotor sleeve 226 is provided at a radially outer perimeter of the rotor 202 and acts to hold the permanent magnets 222 in place on the inner ring 224.

In the example shown, both the stator sleeve 220 and the rotor sleeve 226 are magnetically conductive and may be formed of any of the materials described above in relation to Figure 1.

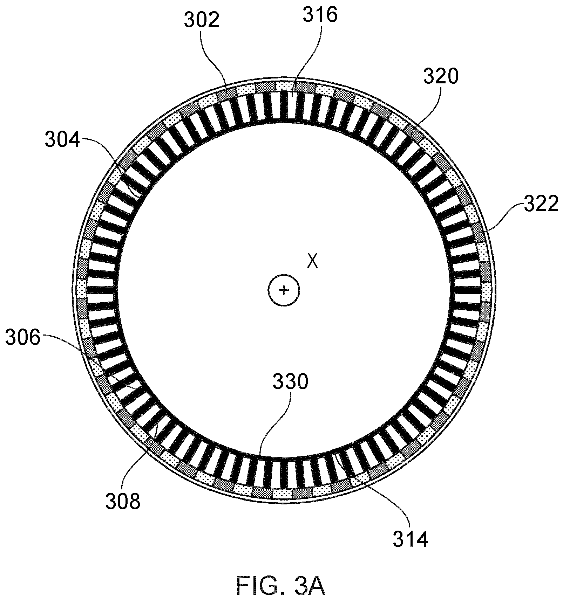

Figure 3A shows a rotor 302 and a stator 304 of a third example electrical machine (not shown).

In the example shown, the stator 304 comprises an annular core 306 which extends around a stator axis X. The annular core 306 may also extend parallel to the stator axis X to form a cylindrical body. In the example of Figure 3A, the stator 304 is a radially inner stator, which extends inside and around the inner circumference of the rotor 302. The core 306 comprises a plurality of slots 308 which receive windings (not shown). The slots 308 extend through the annular core 306 from a first axial end (not shown) to a second axial end (not shown) thereof. In the example shown, the slots 308 extend radially outwardly from the inner circumference 330 of the annular core 306. The slots 308 in the example shown are closed at their radially inner ends 314 and are open at their radially outer ends 316.

To provide cooling to the electrical machine, the slots 308 in the stator 304 can be supplied with a coolant fluid (typically a liquid such as oil in this example) as in the example of Figure 1. To stop the coolant fluid from leaking out of the stator a stator sleeve 320 is provided. The stator sleeve 320 of the example shown is substantially cylindrical, having an annular cross section and is sized to fit around the stator 304 so as to be able to hold coolant fluid within the stator 304.

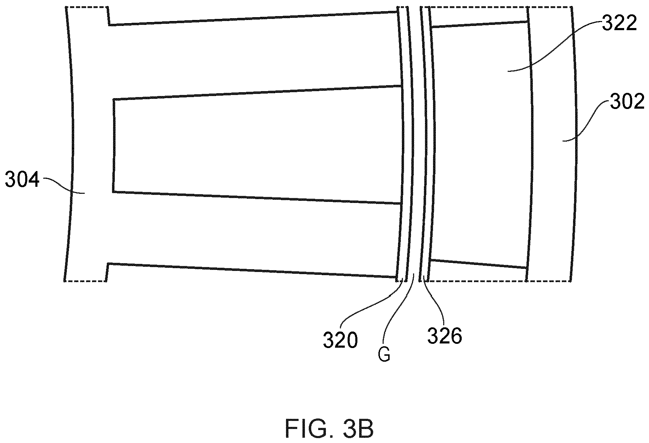

In the example of Figure 3A, the rotor 302 is located radially externally of the stator 304 and comprises permanent magnets 322 mounted circumferentially to form a ring. As seen more clearly in the enlarged view of Figure 3B, a rotor sleeve 326 is provided at a radially inner perimeter of the rotor 302 and acts to hold the permanent magnets 322 in place. An air gap G is formed between the stator sleeve 320 and the rotor sleeve 326. Such an air gap may be provided in an electrical machine according to any example of the disclosure and may be formed between either the stator and a rotor sleeve or between the rotor and a stator sleeve in examples where only a rotor sleeve or only a stator sleeve is provided.

In the example shown, only the stator sleeve 220 is magnetically conductive and may be formed of any of the materials described above in relation to Figure 1.

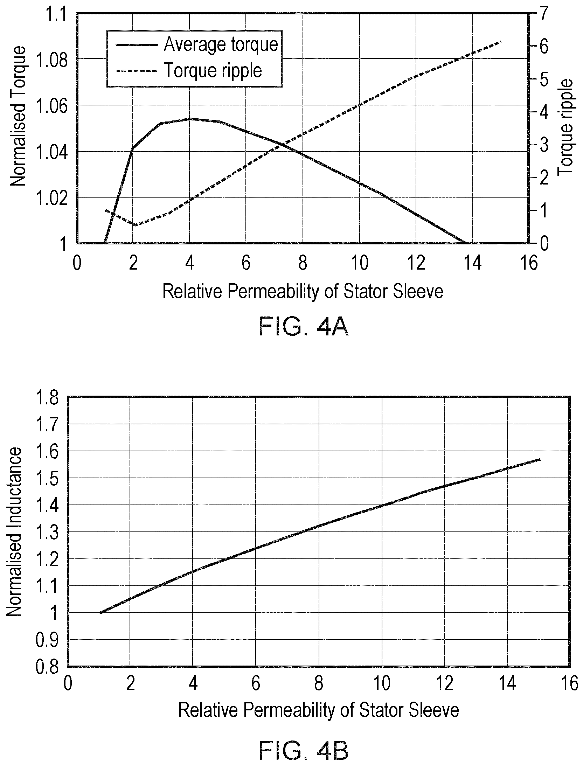

Figure 4A shows the normalised torque and torque ripple achieved for an electrical machine of the type shown in Figure 1 for varying relative permeability of the stator sleeve 20. In the example shown in Figure 1, the electric motor may be a 1MW motor in which the outer stator diameter is in the region of 250 to 300mm. The stator sleeve may have a thickness (as measured in the radial direction) of between about 1mm and about 3mm depending on the pressure the sleeve has to withstand during normal and failure modes.

To improve the efficiency of the electric motor, as seen from Figure 4A, it may be desirable to choose the relative permeability of the stator sleeve 20 so as to maximise the torque which can be achieved. In other examples however, it may be preferable to choose the relative permeability of the stator sleeve 20 so as to reduce the torque ripple produced by the electric machine whilst still maintaining the average torque achieved at a level above a desired minimum value.

Figure 4B is a plot of the normalised inductance achieved against the relative permeability of the stator sleeve 20 in an electrical machine of the type shown in Figure 1. As shown in Figure 4B, the normalised inductance for the electric machine having a stator sleeve with a relative permeability of 1 is 1. This increases to a value of 1.55 for a relative permeability of the sleeve of 15. It will be understood that, in some examples it is desirable to keep the normalised inductance as low as possible as an increased inductance of the electric motor may result in a reduced power factor. In various examples therefore, it may be preferable to choose the relative permeability of the stator sleeve 20 so as to reduce the normalised inductance produced by the electric machine, for example keeping the normalised inductance to below a value of 1.2 or, in other examples, 1.1.

From the example shown in Figure 4A, it will be seen that for the electrical machine for which the data is provided, the torque achieved would be maximised for a relative permeability of the stator sleeve of between about 3 and 5. To reduce the torque ripple produced by the electric machine whilst still maintaining the average torque achieved at a level above a desired minimum value, a relative permeability of the stator sleeve of between about 2 and 5 could be chosen. To balance all the requirements of the electric motor, including reducing the normalised inductance as much as possible, in the example shown, a relative permeability of the stator sleeve of about 4 may therefore be chosen. For some applications such as fault-tolerant machines, higher inductance may be desirable to manage fault currents and higher permeabilities over 4 may be chosen.

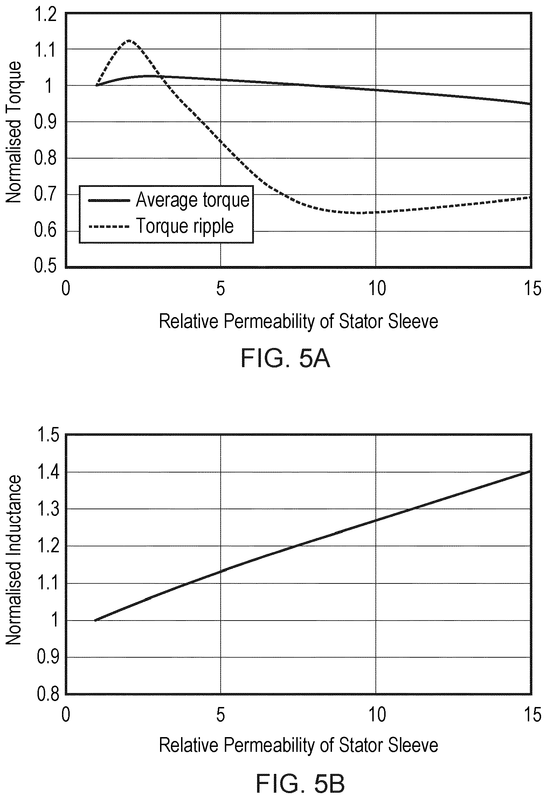

Figure 5A shows the normalised torque and torque ripple achieved for a chosen relative permeability of a stator sleeve 320 in an electric motor of the type shown in Figure 3A. Figure 5B is a plot of the normalised inductance achieved against the relative permeability of the stator sleeve in an electric motor of the type shown in Figure 3A.

In the example shown in Figure 3A or in any other example of the disclosure, the electric motor may again be a 1MW motor. The outer rotor diameter may be in the region of 500 to 600mm. The stator sleeve 320 may have a thickness (as measured in the radial direction) of between about 1mm and about 3mm.

To improve the efficiency of the electric motor, in any example of the disclosure, it may be desirable to choose the relative permeability of the stator sleeve and /or the rotor sleeve so as to maximise the torque which can be achieved. In other examples however, it may be preferable to choose the relative permeability of the stator sleeve and /or the rotor sleeve so as to reduce the torque ripple produced by the electric machine whilst still maintaining the average torque achieved at a level above a desired minimum value.

Figure 5B is a plot of the normalised inductance achieved against the relative permeability of the stator sleeve 320 in an electrical machine of the type shown in Figure 3A. As shown in Figure 5B, the normalised inductance for the electric machine having a stator sleeve with a relative permeability of 1 is 1. This increases to a value of about 1.4 for a relative permeability of the sleeve of 15. It will be understood that, in some examples it is desirable to keep the normalised inductance as low as possible as an increased inductance of the electric motor may result in a reduced power factor. In various examples therefore, it may be preferable to choose the relative permeability of the stator sleeve 320 so as to reduce the normalised inductance produced by the electric machine, for example keeping the normalised inductance to below a value of 1.2 or possibly 1.1. For some applications such as fault-tolerant machines, higher inductance may be desirable to manage fault currents and higher permeabilities over 4 may be chosen.

From the example shown in Figure 5A, it will be seen that for the electrical machine for which the data is provided, the torque achieved would be maximised for a relative permeability of the stator sleeve of between about 2 and 4. To reduce the torque ripple produced by the electric motor whilst still maintaining the average torque achieved at a level above a desired minimum value, a relative permeability of the stator sleeve 320 of between about 5 and 10 could be chosen.

It will be understood that the chosen relative permeability of a stator sleeve and /or a rotor sleeve in an electrical machine according to any example of the disclosure may vary depending on a number of factors. In various examples of the disclosure, to improve performance of an electrical machine, the stator sleeve or the rotor sleeve or both the stator and rotor sleeves of the electrical machine may have a relative permeability of between about 1.1 and 12 or between about 1.2 and 10. In other examples, where it is desirable for example to maximise the average torque achievable, the stator sleeve or the rotor sleeve or both the stator and the rotor sleeves of an electrical machine may have a relative permeability of between about 2 and 6.

Electrical machines according to examples of the disclosure and including those described above with reference to the Figures may be relatively simple and cost effective to manufacture and assemble. Because the stator sleeve and/or the rotor sleeve may comprise an annular component which can be assembled onto or removed from the stator or rotor in a single piece, the stator sleeve may be either inserted into the stator (where it is radially internal of the stator) or the stator may be inserted into the stator sleeve (where the stator sleeve is radially external of the stator). In a similar manner, the rotor sleeve may be either inserted into the rotor (where it is radially internal of the rotor) or the rotor may be inserted into the rotor sleeve (where the rotor sleeve is radially external of the rotor) or the rotor sleeve may be manufactured directly over the rotor magnet assembly. The electrical machine may then be assembled by either inserting the rotor into the stator or by inserting the stator into the rotor (after the rotor and/or stator sleeves have been assembled on the rotor and stator respectively as required). It will be understood that it would also be possible to retrofit a magnetically conductive rotor sleeve and/ or stator sleeve onto an existing electrical machine in order to improve the performance thereof.

It will further be understood that an electrical machine having only a stator sleeve, only a rotor sleeve or both a stator sleeve and a rotor sleeve may be provided. Further, in any example of the disclosure in which both a stator sleeve and a rotor sleeve are provided, only one of the stator sleeve and the rotor sleeve may be magnetic (having a relative permeability of more than 1). In examples in which both the stator sleeve and the rotor sleeve are magnetic, the relative permeability of the stator sleeve and the rotor sleeve may be chosen to be the same and to be at any value above one or within the ranges identified above. In other examples however, the relative permeability of the stator sleeve and the rotor sleeve may be chosen to be different from each other and to be at any respective value above one or within the ranges identified above.

While the disclosure has been described in detail in connection with only a limited number of examples, it should be readily understood that the disclosure is not limited to such disclosed examples. Rather, the disclosure can be modified to incorporate any number of variations, alterations, substitutions or equivalent arrangements not heretofore described, but which are commensurate with the scope of disclosure. Additionally, while various examples of the disclosure have been described, it is to be understood that aspects of the disclosure may include only some of the described examples. Accordingly the disclosure is not to be seen as limited by the foregoing description, but is only limited by the scope of the appended claims.

## Claims

1. An electrical machine comprising:
a stator;
a rotor; and
at least one of a rotor sleeve and a stator sleeve extending between the stator and the rotor,
wherein at least one of the rotor sleeve and the stator sleeve is magnetically conductive, wherein the magnetic permeability of the at least one of the stator sleeve and the rotor sleeve is continuous along the circumference thereof.

2. An electrical machine as claimed in claim 1, and comprising the stator sleeve, wherein:
when the stator is positioned radially internally of the rotor, the stator sleeve extends around a radially outer surface of the stator; or
wherein when the stator is positioned radially externally of the rotor, the stator sleeve extends around a radially inner surface of the stator.

3. An electrical machine as claimed in claim 1 or 2, and comprising the rotor sleeve,
wherein when the stator is positioned radially externally of the rotor, the rotor sleeve extends around a radially outer surface of the rotor; or
wherein when the stator is positioned radially internally of the rotor, the rotor sleeve extends around a radially inner surface of the rotor.

4. An electrical machine as claimed in claim 1, 2 or 3, the rotor having an axis of rotation,
wherein the stator is positioned such that a central axis of the stator is coaxial with the axis of rotation.

5. An electrical machine as claimed in any preceding claim, wherein the stator sleeve and /or the rotor sleeve is made from stainless steel, wherein the stainless steel has induced magnetic properties from cold working.

6. An electrical machine as claimed in any preceding claim, wherein the stator sleeve and /or the rotor sleeve is made from a carbon composite or a glass fibre composite including an embedded magnetic material therein.

7. An electrical machine as claimed in any preceding claim, wherein the stator sleeve and /or the rotor sleeve is made from a resin or plastic including an embedded magnetic material therein.

8. An electrical machine as claimed in any preceding claim, wherein:
the stator sleeve extends a full revolution around the radially inner surface or the radially outer surface of the stator; and/or
the rotor sleeve extends a full revolution around the radially inner surface or the radially outer surface of the rotor.

9. An electrical machine as claimed in any preceding claim, wherein the stator sleeve and /or the rotor sleeve is annular.

10. An electrical machine as claimed in any preceding claim,
wherein the stator sleeve can be assembled onto and/or removed from the stator in a single piece, and /or
wherein the rotor sleeve can be assembled onto and/or removed from the rotor in a single piece.

11. An electrical machine as claimed in any preceding claim, wherein the rotor comprises permanent magnets.

12. An electrical machine as claimed in any preceding claim, wherein the stator sleeve and /or the rotor sleeve have a relative permeability of between about 1.1 and 12.

13. An electrical machine as claimed in any preceding claim, wherein the stator sleeve and /or the rotor sleeve have a relative permeability of between about 1.2 and 10.

14. An electrical machine as claimed in any preceding claim, wherein the stator sleeve and /or the rotor sleeve have a relative permeability of between about 2 and 6.

15. A method of assembling an electrical machine as claimed in any preceding claim, the method comprising either:
inserting the stator into the stator sleeve and then inserting the stator and stator sleeve into the rotor; or
inserting the stator sleeve into the stator and then inserting the rotor into the stator and stator sleeve;
inserting the rotor sleeve into the rotor and then inserting the stator into the rotor and rotor sleeve; or
inserting the rotor into the rotor sleeve and then inserting the rotor and rotor sleeve into the stator.
